# EUROPEAN PATENT SPECIFICATION

(11) **EP 3 889 009 B1**
(45) Date of publication and mention of the grant of the patent: **07.06.2023**
(21) Application number: 20836365.5
(22) Date of filing: 09.05.2020
(51) Int. Cl.: B62D 25/24, B60L 53/16, E05F 15/635, B60K 15/05, E05F 15/619

(54) **CHARGING INTERFACE COMPONENT AND VEHICLE**
LADESCHNITTSTELLENKOMPONENTE UND FAHRZEUG
ÉLÉMENT D'INTERFACE DE CHARGE ET VÉHICULE

(30) Priority: 05.07.2019 CN 201910605876
(43) Date of publication of application: 06.10.2021
(73) Proprietor: Guangzhou Xiaopeng Autopilot Technology Co., Ltd., Guangzhou, Guangdong 510640 (CN)
(72) Inventor: YONG MIN, Zhang, Guangzhou, Guangdong 510640 (CN); KE FENG, Zhang, Guangzhou, Guangdong 510640 (CN); JIAN CHUN, Li, Guangzhou, Guangdong 510640 (CN); CHUAN BO, Liu, Guangzhou, Guangdong 510640 (CN); QING CHUN, Jiao, Guangzhou, Guangdong 510640 (CN)
(74) Representative: Ran, Handong
(86) International application number: PCT/CN2020/089461
(87) International publication number: WO 2021/004147

(56) References cited:
- WO-A1-2018/219268
- CN-A- 101 994 446
- CN-A- 104 924 896
- CN-A- 109 301 591
- CN-A- 110 239 633
- CN-U- 209 008 697
- CN-U- 209 008 697
- DE-A1-102017 212 397
- DE-A1-102017 223 396
- JP-A- 2012 030 750

## Description

### CROSS-REFERENCE TO RELATED APPLICATION

The present application claims a priority to Chinese Patent Application No. CN201910605876.1, titled "CHARGING PORT ASSEMBLY AND VEHICLE", and filed with the CNIPA on July 5, 2019.

### TECHNICAL FIELD

The present invention belongs to the field of vehicle manufacturing technologies, and more specifically, relates to a charging port assembly, and a vehicle having the charging port assembly.

### BACKGROUND

An electric vehicle is provided with a charging port cover on a vehicle body. The charging port cover can open or close a charging port. A widely adopted technical solution for an electric charging port cover is that a driving gear of a driving mechanism engages with a rack, and the rack is connected to the charging port cover through a transmission mechanism. In this technical solution, on the one hand, a large volume of the driving mechanism hampers a spatial arrangement of the charging port cover and the rack; and on the other hand, due to an assembly error of the driving mechanism, an engagement error between the driving gear and the rack may also be significant. As a result, the driving mechanism can hardly output power stably, and abnormal noises may be generated during the movement. Patent document CN209008697U discloses a cover assembly and a vehicle. The cover assembly includes: a driver; a sliding rail rod arranged on one side of the interior of the vehicle body panel; and a movable mechanism to be driven by the driver to move between at least a first position and a second position along the slide rail rod. In the first position, at least a portion of the movable mechanism is substantially flush with the vehicle body panel; and in the second position, the movable mechanism is completely located at one side of the interior of the vehicle body panel. Patent document WO2018219268A1 discloses an auto-sliding cover system for refueling ports and charging ports. The auto-sliding cover system includes a cover assembly for obstructing a charging port or refueling port, a transmission mechanism, an actuating device, and a locking and closing mechanism provided on the cover assembly. The one end of the transmission mechanism is fixed to the inner side of the cover assembly, and the other end of the transmission mechanism cooperates with the actuating device. The actuating device is fixed to the inner side of the bodywork of an automobile.

### SUMMARY

The present invention aims to solve at least one of the technical problems in the related art.

An object of the present invention is to provide a charging port assembly. The charging port assembly includes: a charging port seat provided with a guiding structure, the guiding structure having a bending section; a charging port cover mounted to the charging port seat in an openable and closable manner; a transmission mechanism slidably fitting with the guiding structure and connected to the charging port cover; and a driving mechanism dynamically coupled with the transmission mechanism. The driving mechanism includes a driving gear and at least one driven gear, the transmission mechanism includes a rack, and the rack engages with one driven gear of the at least one driven gear.

Since the charging port assembly according to embodiments of the present disclosure invention is provided with the guiding structure having the bending section, an opening and closing trajectory of the charging port cover is better.

The present invention further provides a vehicle including the charging port assembly as described above.

The vehicle has the same advantages over the related art as the above-mentioned charging port assembly, and thus description of the advantages will be omitted here.

Additional aspects and advantages of the present invention will be given at least in part in the following description, or become apparent at least in part from the following description, or can be learned from practicing of the present invention.

### BRIEF DESCRIPTION OF DRAWINGS

The above and/or additional aspects and advantages of the present invention will become more apparent and more understandable from the following description of embodiments in conjunction with the accompanying drawings, in which:
FIG. 1 is a structural schematic diagram of a charging port assembly according to an embodiment of the present invention;
FIG. 2 is a partial enlarged view of portion A in FIG. 1;
FIG. 3 is a cross-sectional view of a charging port assembly at a connecting column according to an embodiment of the present invention; and
FIG. 4 is a structural schematic diagram of a charging port assembly according to another embodiment of the present invention;

Reference signs:
charging port assembly 100,
charging port seat 10, guiding structure 11, first sliding groove 12, second sliding groove 13, first supporting column 14, second supporting column 15, bending section 16,
charging port cover 20,
rack 30, rack body 31, connecting column 32, first connecting column 32a, second connecting column 32b, lightening hole 33, first driven gear 40, second driven gear 51, transmission belt 52,
driving gear 60.

### DESCRIPTION OF EMBODIMENTS

The embodiments of the present invention will be described in detail below with reference to examples thereof as illustrated in the accompanying drawings, throughout which same or similar elements are denoted by same or similar reference signs. The embodiments described below with reference to the drawings are illustrative, and are merely intended to explain, rather than limiting, the present invention. The scope of the invention is defined and limited only by the subject-matter of the appended claims.

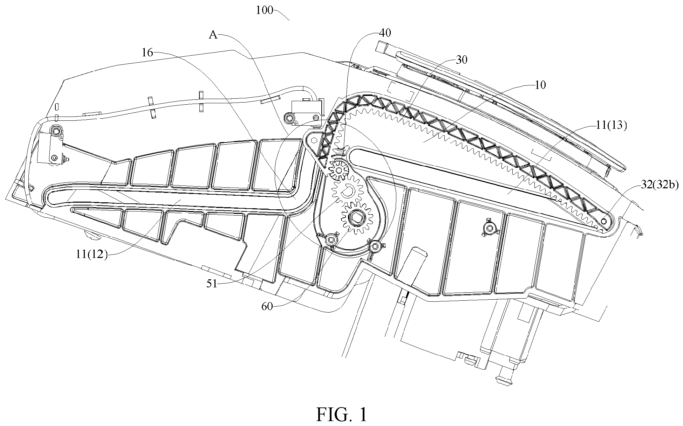

A charging port assembly 100 according to the invention is described with reference to FIG. 1 to FIG. 4 as below.

As illustrated in FIG. 1 to FIG. 3, the charging port assembly 100 according to the invention includes a charging port seat 10, a charging port cover 20, a transmission mechanism, and a driving mechanism.

The charging port seat 10 is configured to be mounted on a vehicle body. The charging port seat 10 may be provided with a charging port. The charging port cover 20 is mounted to the charging port seat 10 in an openable and closable manner. When the charging port cover 20 moves relative to the charging port seat 10, the charging port can be opened or closed.

The charging port seat 10 is provided with a guiding structure 11. The transmission mechanism slidably fits with the guiding structure 11. The guiding structure 11 is configured to guide the transmission mechanism to move in accordance with a given trajectory. The transmission mechanism is connected to the charging port cover 20. When the transmission mechanism moves along the guiding structure 11, the transmission mechanism can drive the charging port cover 20 to open and close. The transmission mechanism can reciprocate along the guiding structure 11 to switch from cover-closing to cover-opening as well as switch from cover-opening to cover-closing.

The guiding structure 11 has a bending section 16. When the transmission mechanism passes the bending section 16 of the guiding structure 11, the transmission mechanism can drive the charging port cover 20 to move in two intersecting directions, thereby facilitating the switching from cover-opening to cover-closing. The guiding structure 11 designed with the bending section 16 allows a better opening and closing trajectory of the charging port cover 20.

The driving mechanism is dynamically coupled with the transmission mechanism. The driving mechanism is configured to drive the transmission mechanism to move.

Since the charging port assembly 100 according to the invention is provided with the guiding structure 11 having the bending section 16, the opening and closing trajectory of the charging port cover 20 is better.

The transmission mechanism includes a rack 30. The driving mechanism includes a power source (not shown), a driving gear 60, and at least one driven gear. An output of the power source is provided with the driving gear 60. The power source may include an electric motor. Electric control is simple, and can realize forward and reverse rotation easily. The driving gear 60 may be dynamically coupled with a motor shaft of the electric motor through, for example, a spline structure, a shaft pin, or a flat key.

The rack 30 engages with one driven gear of the at least one driven gear. The driving gear 60 is dynamically coupled with the driven gear. The driving gear 60 and a first driven gear may be connected to each other directly or connected to each other through other transmission structures. The driven gear engages with the rack 30. That is, when the power source works, the driving gear 60 drives the driven gear to rotate, and the driven gear drives the rack 30 to move along the guiding structure 11, thereby opening and closing the charging port cover 20.

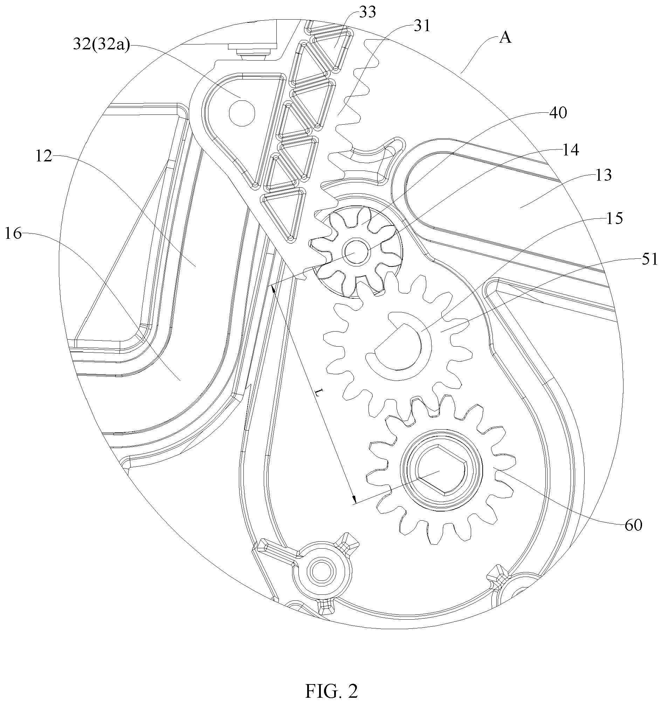

As illustrated in FIG. 2, a distance L between an axis of the one driven gear engaging with the rack 30 and an axis of the driving gear satisfies L ≥ 20mm, for example, L = 25mm.

It can be understood that, the driving mechanism needs to be mounted in the charging port seat 10, especially the power source of the driving mechanism occupies a large space, and an assembly space left for the guiding structure 11 is small. A shape and a path of the guiding structure 11 directly affect the opening and closing trajectory of the charging port cover 20. In the related art, a problem with available space greatly limits the design of the guiding structure 11, such that the opening and closing trajectory of the charging port cover 20 is relatively simple, and it is difficult to design a unique and more suitable opening and closing manner.

The driven gear is designed between the driving gear 60 and the rack 30, and the distance L between the axis of the driving gear 60 and the axis of the driven gear is increased. In this way, due to the large distance between the driving mechanism and the transmission mechanism, the driving mechanism will not interfere with movement of the transmission mechanism, which allows to design the guiding structure having the bending section 16, thereby improving the opening and closing trajectory of the charging port cover 20. On the other hand, since the driven gear is designed, the driving gear 60 does not directly drive the transmission mechanism, thereby overcoming a mounting and matching error of the driving mechanism, and making the movement of the mechanism more stable.

With the charging port assembly 100 according to the invention, since the driven gear is provided, and the distance L between the axis of the driving gear 60 and the axis of the driven gear is increased, interference between the driving mechanism and the transmission mechanism can be prevented, a movement mechanism has high stability, and the opening and closing trajectory of the charging port cover 20 is better.

A corresponding driving mechanism is not limited to a mechanism of the power source plus gears. For example, the driving mechanism may be in a structure form including the power source, a worm, and the gears. In this way, the power source can be arranged in a staggered manner, while the interference between the power source and the guiding structure 11 can also be prevented.

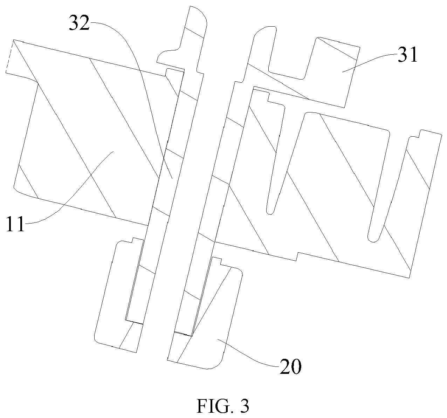

As illustrated in FIG. 2 and FIG. 3, the transmission mechanism includes the rack 30. The rack 30 includes a rack body 31 and a connecting column 32. The driven gear engaging with the rack 30 engages with a tooth surface of the rack body 31. The connecting column 32 is connected to the rack body 31. The connecting column 32 slidably fits with the guiding structure 11, and passes the bending section 16 during operation. The charging port cover 20 is connected to the connecting column 32. In an actual implementation, as illustrated in FIG. 2, a side of the rack body 31 facing away from the tooth surface includes a protruding lug. The lug is provided with the connecting column 32. In this way, in a limited space, power transmission of the rack 30 is convenient, and connection between the rack 30 and the charging port cover 20 can be realized. The rack body 31 may be provided with a plurality of lightening holes 33 to reduce the weight of the charging port assembly 100.

As illustrated in FIG. 2 and FIG. 3, the guiding structure 11 includes a sliding groove. The sliding groove includes the bending section 16. The connecting column 32 extends into the sliding groove, and penetrates a bottom wall of the sliding groove. The rack body 31 and the charging port cover 20 are respectively connected to two ends of the connecting column 32, and respectively located on two sides of the sliding groove. In this way, through a separation of the guiding structure 11, the interference between the rack 30 and the charging port cover 20 can be prevented. In other words, racks 30 such as the rack body 31 and the driving gear 60 can be arranged on two sides of the charging port seat 10 relative to the charging port cover 20, so as to provide a good shielding property.

As illustrated in FIG. 1, the guiding structure 11 includes a first sliding groove 12 and a second sliding groove 13. The connecting column 32 includes a first connecting column 32a and a second connecting column 32b that are connected to two ends of the rack body 31, respectively. The first connecting column 32a slidably fits in the first sliding groove 12. The second connecting column 32b slidably fits in the second sliding groove 13.

A structure of dual sliding grooves and dual connecting columns makes a movement trajectory of the rack 30 more stable and reliable. A shape of the dual sliding grooves can be designed based on the opening or closing trajectory of the designed charging port cover 20. For example, in an embodiment illustrated in FIG. 1, the first sliding groove 12 is in a bent shape, and the first sliding groove 12 includes the bending section 16.

As illustrated in FIG. 1, the charging port assembly 100 includes the charging port seat 10, the charging port cover 20, the rack 30, and the driving mechanism. The driving mechanism includes a first driven gear 40, a second driven gear 51, and the power source.

The driving gear 60 and the second driven gear 51 of the driving mechanism engage with each other. The second driven gear 51 engages with the first driven gear 40. The first driven gear 40 engages with the rack 30.

It can be understood that, in the charging port assembly 100 of the above mechanism, a motion of the driving gear 60 is transmitted to the second driven gear 51, but not directly transmitted to the rack 30, thereby overcoming instability of the movement mechanism caused by the mounting and matching error of the driving mechanism. Therefore, the movement mechanism of a product is stable.

Two driven gears are provided between the driving gear 60 and the rack 30, and thus a gap therebetween is large. There is enough space to arrange movement positions of the movement guiding structure 11 and the rack 30, and thus it is easy to provide a movement space for opening and closing the charging port cover 20.

As illustrated in FIG. 2, the charging port seat 10 is provided with a first supporting column 14. The first driven gear 40 is rotatably mounted to the first supporting column 14. The charging port seat 10 is provided with a second supporting column 15. The second driven gear 51 is rotatably mounted to the first supporting column 14.

The driven gear is fixed on a supporting column. A matching precision between the second driven gear 51 and the first driven gear 40 can be up to ±0.1 mm. The precision is very high and stable. In an actual implementation, the second driven gear 51 is made of a PG6 (polyamide) + GF50 (glass fiber-modified, with a glass fiber content of 50%) material, which has high hardness and strength. The first driven gear 40 is made of a polyoxymethylene (POM) material. The second driven gear 51 and the first driven gear 40 are stable in cooperation with each other. The rack 30 is made of the PG6+GF50 material, which has high hardness and strength. The driving gear 60 is made of the POM material, which has good tenacity and lubricity. Consequently, abnormal transmission noises caused by instability resulted from an error in a mounting process of the driving mechanism are eliminated.

A movement process of the charging port cover 20 is determined by the path of the guiding structure 11. The path of the guiding structure 11 can be designed in a free and flexible way, and thus the movement trajectory of the charging port cover 20 can be flexibly designed. A precision between the guiding structure 11 and the rack 30 can be up to ±0.1mm. The precision is very high and stable. The movement process of the charging port cover 20 is very stable.

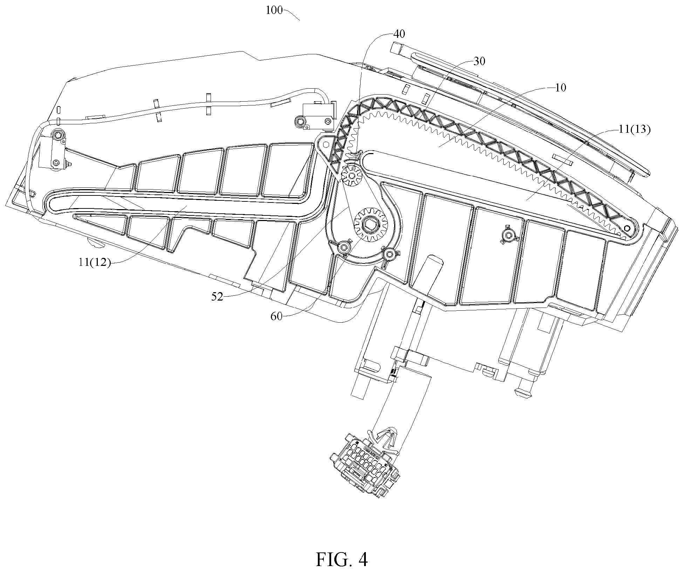

As illustrated in FIG. 4, the charging port assembly 100 includes the charging port seat 10, the charging port cover 20, the rack 30, and the driving mechanism. The driving mechanism includes the first driven gear 40, a transmission belt 52, and the power source.

The driving gear 60 and the first driven gear 40 are spaced apart from each other, and the driving gear 60 and the first driven gear 40 are dynamically coupled with each other through the transmission belt 52.

It can be understood that, in the charging port assembly 100 of the above mechanism, a motion of the driving gear 60 is transmitted to the first driven gear 40 through the transmission belt 52, rather than being directly transmitted to the rack 30, thereby overcoming instability of the movement mechanism caused by the mounting and matching error of the driving mechanism. Therefore, the movement mechanism of the product is stable.

The driving gear 60 and the first driven gear 40 are spaced apart from each other to leave a large gap. There is enough space to arrange the movement positions of the movement guiding structure 11 and the rack 30, and it is easy to provide the movement space for opening and closing the charging port cover 20.

The charging port seat 10 is provided with the first supporting column 14. The first driven gear 40 is rotatably mounted to the first supporting column 14.

In this way, the first driven gear 40 is fixed on the supporting column. The matching precision between the second driven gear 51 and the first driven gear 40 can be up to ±0.1mm. The precision is very high and stable. In an actual implementation, the first driven gear 40 is made of the POM material. The rack 30 is made of the PG6+GF50 material, which has high hardness and strength. The first driven gear 40 and the rack 30 are in stable cooperation with each other. The driving gear 60 is made of the POM material, which has good tenacity and lubricity. Consequently, the abnormal transmission noises caused by instability resulted from an error in the mounting process of the driving mechanism are eliminated.

The movement process of the charging port cover 20 is determined by the path of the guiding structure 11. The path of the guiding structure 11 can be designed in a free and flexible way, and thus. the movement trajectory of the charging port cover 20 can be flexibly designed. The precision between the guiding structure 11 and the rack 30 can be up to ±0.1mm. The precision is very high and stable. The movement process of the charging port cover 20 is very stable.

In summary, with the charging port assembly 100 of the present invention, the mounting and matching error of the driving mechanism can be eliminated, stability of the movement mechanism can be provided, the difficulties in designing the movement space for opening and closing the charging port cover 20 and in arranging the rack 30 can be lowered, the abnormal transmission noises of the driven gear can be eliminated, and the charging port cover 20 is prevented from shaking caused by the unstable movement during the opening and closing process.

The present invention also relates to a vehicle.

The vehicle according to the invention includes the charging port assembly 100 according to any of the above embodiments. For the vehicle of the present disclosure, the charging port cover 20 can be opened and closed stably.

The invention is defined by the subject-matter of the independent claim 1. Potential further embodiments of the invention form the scope of the subject-matter of the dependent claims.

Although the embodiments of present disclosure have been illustrated and described above, it should be understood by those skilled in the art that changes, alternatives, and modifications can be made without departing from the scope of protection, defined only by the appended claims.

## Claims

1. A charging port assembly (100), comprising:
a charging port seat (10) provided with a guiding structure (11), the guiding structure (11) having a bending section (16);
a charging port cover (20) mounted to the charging port seat (10) in an openable and closable manner;
a transmission mechanism slidably fitting with the guiding structure (11) and connected to the charging port cover (20); and
a driving mechanism dynamically coupled with the transmission mechanism;
**characterized in that**
the driving mechanism comprises a driving gear (60) and at least one driven gear, the transmission mechanism comprises a rack (30), and the rack (30) engages with one driven gear of the at least one driven gear.

2. The charging port assembly (100) according to claim 1, wherein a distance L between an axis of the one driven gear engaging with the rack (30) and an axis of the driving gear (60) satisfies L ≥20mm.

3. The charging port assembly (100) according to claim 1 or 2, wherein the rack (30) comprises:
a rack body (31) engaging with the one driven gear; and
a connecting column (32), wherein the connecting column (32) is connected to the rack body (31), the connecting column (32) slidably fits with the guiding structure (11), and passes the bending section (16) during operation, and the connecting column (32) is connected to the charging port cover (20).

4. The charging port assembly (100) according to claim 3, wherein the one driven gear engaging with the rack (30) engages with a tooth surface of the rack body (31), a protruding lug is arranged on a side of the rack body (31) facing away from the tooth surface includes, and the protruding lug is provided with the connecting column (32).

5. The charging port assembly (100) according to claim 3 or 4, wherein the rack body (31) is provided with one or more lightening holes (33).

6. The charging port assembly (100) according to any of claims 3 to 5, wherein the rack body (31) is arranged on two sides of the charging port seat (10).

7. The charging port assembly (100) according to any of claims 3 to 6, wherein the guiding structure (11) comprises a sliding groove, the connecting column (32) extends into the sliding groove and penetrates a bottom wall of the sliding groove, the rack body (31) and the charging port cover (20) are respectively connected to both ends of the connecting column (32) and respectively located on sides of the sliding groove, and the sliding groove comprises the bending section (16).

8. The charging port assembly (100) according to any of claims 3 to 6, wherein the guiding structure (11) comprises a first sliding groove (12) and a second sliding groove (13), the connecting column (32) comprises a first connecting column (32a) and a second connecting column (32b) that are connected to both ends of the rack body (31), respectively, the first connecting column (32a) slidably fits with the first sliding groove (12), and the second connecting column (32b) slidably fits with the second sliding groove (13).

9. The charging port assembly (100) according to claim 8, wherein the first sliding groove (12) is in a bent shape and comprises the bending section (16).

10. The charging port assembly (100) according to any of claims 1 to 9, wherein the charging port seat (10) is provided with a first supporting column (14), and one of the at least one driven gear is rotatably mounted to the first supporting column (14).

11. The charging port assembly (100) according to any one of claims 1 to 10, wherein the at least one driven gear comprises:
a first driven gear (40) engaging with the rack (30); and
a second driven gear (51) engaging with the driving gear (60) and the first driven gear (40).

12. The charging port assembly (100) according to claim 11, wherein the driving gear (60) is made of a POM material, the second driven gear (51) is made of a PG6+GF50 material, the first driven gear (40) is made of the POM material, and the rack (30) is made of the PG6+GF50 material.

13. The charging port assembly (100) according to any one of claims 1 to 10, wherein the at least one driven gear comprises a first driven gear (40) engaging with the rack (30), and the driving mechanism further comprises:
a transmission belt (52),
wherein the driving gear (60) and the first driven gear (40) are spaced apart from each other, and dynamically coupled with each other through the transmission belt (52).

14. A vehicle, comprising the charging port assembly (100) according to any one of claims 1 to 13.

## Patentansprüche

1. Ladeanschlussanordnung (100), die Folgendes umfasst:
einen Ladeanschlusssitz (10), der mit einer Führungsstruktur (11) versehen ist, wobei die Führungsstruktur (11) einen Biegeabschnitt (16) aufweist;
eine Ladeanschlussabdeckung (20), die am Ladeanschlusssitz (10) in einer öffenbaren und schließbaren Weise montiert ist;
einen Übertragungsmechanismus, der gleitend mit der Führungsstruktur (11) zusammenpasst und mit der Ladeanschlussabdeckung (20) verbunden ist; und
einen Antriebsmechanismus, der dynamisch mit dem Übertragungsmechanismus gekoppelt ist;
**dadurch gekennzeichnet, dass**
der Antriebsmechanismus ein Antriebszahnrad (60) und mindestens ein angetriebenes Zahnrad umfasst, der Übertragungsmechanismus eine Zahnstange (30) umfasst und die Zahnstange (30) mit einem angetriebenen Zahnrad des mindestens einen angetriebenen Zahnrades in Eingriff steht.

2. Ladeanschlussanordnung (100) nach Anspruch 1, wobei ein Abstand L zwischen einer Achse des einen angetriebenen Zahnrads im Eingriff mit der Zahnstange (30) und einer Achse des Antriebszahnrads (60) L ≥20mm beträgt.

3. Ladeanschlussanordnung (100) nach Anspruch 1 oder 2, wobei die Zahnstange (30) Folgendes umfasst:
einen Zahnstangenkörper (31) im Eingriff mit dem einen angetriebenen Zahnrad; und
eine Verbindungssäule (32), wobei die Verbindungssäule (32) mit dem Zahnstangenkörper (31) verbunden ist, die Verbindungssäule (32) gleitend mit der Führungsstruktur (11) zusammenpasst und den Biegeabschnitt (16) während des Betriebs passiert, und die Verbindungssäule (32) mit der Ladeanschlussabdeckung (20) verbunden ist.

4. Ladeanschlussanordnung (100) nach Anspruch 3, wobei das eine angetriebene Zahnrad im Eingriff mit der Zahnstange (30) in eine Zahnfläche des Zahnstangenkörpers (31) eingreift, eine vorstehende Nase auf einer Seite des Zahnstangenkörpers (31) von der Zahnfläche abgewandt angeordnet ist und die vorstehende Nase mit der Verbindungssäule (32) versehen ist.

5. Ladeanschlussanordnung (100) nach Anspruch 3 oder 4, wobei der Zahnstangenkörper (31) mit einem oder mehreren Erleichterungslöchern (33) versehen ist.

6. Ladeanschlussanordnung (100) nach einem der Ansprüche 3 bis 5, wobei der Zahnstangenkörper (31) auf zwei Seiten des Ladeanschlusssitzes (10) angeordnet ist.

7. Ladeanschlussanordnung (100) nach einem der Ansprüche 3 bis 6, wobei die Führungsstruktur (11) eine Gleitrille umfasst, die Verbindungssäule (32) sich in die Gleitrille erstreckt und eine Bodenwand der Gleitrille durchdringt, der Zahnstangenkörper (31) und die Ladeanschlussabdeckung (20) jeweils mit beiden Enden der Verbindungssäule (32) verbunden sind und sich jeweils auf Seiten der Gleitrille befinden, und die Gleitrille den Biegeabschnitt (16) aufweist.

8. Ladeanschlussanordnung (100) nach einem der Ansprüche 3 bis 6, wobei die Führungsstruktur (11) eine erste Gleitrille (12) und eine zweite Gleitrille (13) umfasst, die Verbindungssäule (32) eine erste Verbindungssäule (32a) und eine zweite Verbindungssäule (32b) umfasst, die jeweils mit beiden Enden des Zahnstangenkörpers (31) verbunden sind, die erste Verbindungssäule (32a) gleitend mit der ersten Gleitrille (12) zusammenpasst und die zweite Verbindungssäule (32b) gleitend mit der zweiten Gleitrille (13) zusammenpasst.

9. Ladeanschlussanordnung (100) nach Anspruch 8, wobei die erste Gleitrille (12) eine gebogene Form hat und den Biegeabschnitt (16) umfasst.

10. Ladeanschlussanordnung (100) nach einem der Ansprüche 1 bis 9, wobei der Ladeanschlusssitz (10) mit einer ersten Tragsäule (14) versehen ist und eines der mindestens einen angetriebenen Zahnräder drehbar an der ersten Tragsäule (14) montiert ist.

11. Ladeanschlussanordnung (100) nach einem der Ansprüche 1 bis 10, wobei das mindestens eine angetriebene Zahnrad Folgendes umfasst:
ein erstes angetriebenes Zahnrad (40) im Eingriff mit der Zahnstange (30); und
ein zweites angetriebenes Zahnrad (51) im Eingriff mit dem Antriebszahnrad (60) und dem ersten angetriebenen Zahnrad (40).

12. Ladeanschlussanordnung (100) nach Anspruch 11, wobei das Antriebszahnrad (60) aus einem POM-Material, das zweite angetriebene Zahnrad (51) aus einem PG6+GF50-Material, das erste angetriebene Zahnrad (40) aus dem POM-Material und die Zahnstange (30) aus dem PG6+GF50-Material gefertigt sind.

13. Ladeanschlussanordnung (100) nach einem der Ansprüche 1 bis 10, wobei das mindestens eine angetriebene Zahnrad ein erstes angetriebenes Zahnrad (40) im Eingriff mit der Zahnstange (30) umfasst und der Antriebsmechanismus ferner Folgendes umfasst:
einen Übertragungsriemen (52),
wobei das Antriebszahnrad (60) und das erste angetriebene Zahnrad (40) voneinander beabstandet und über den Übertragungsriemen (52) dynamisch miteinander gekoppelt sind.

14. Fahrzeug, das die Ladeanschlussanordnung (100) nach einem der Ansprüche 1 bis 13 umfasst.

## Revendications

1. Ensemble de port de charge (100), comprenant :
un siège de port de charge (10) doté d'une structure de guidage (11), la structure de guidage (11) présentant une section de courbure (16) ;
un couvercle de port de charge (20) monté sur le siège de port de charge (10) de manière ouvrable et refermable ;
un mécanisme de transmission s'ajustant de manière coulissante avec la structure de guidage (11) et relié au couvercle de port de charge (20) ; et
un mécanisme d'entraînement couplé de manière dynamique au mécanisme de transmission ;
**caractérisé en ce que**
le mécanisme d'entraînement comprend un engrenage d'entraînement (60) et au moins un engrenage entraîné, le mécanisme de transmission comprend une crémaillère (30), et la crémaillère (30) vient en prise avec un engrenage entraîné de l'au moins un engrenage entraîné.

2. Ensemble de port de charge (100) selon la revendication 1, dans lequel une distance L entre un axe de l'engrenage entraîné en prise avec la crémaillère (30) et un axe de l'engrenage d'entraînement (60) vérifie L ≥ 20 mm.

3. Ensemble de port de charge (100) selon la revendication 1 ou 2, dans lequel la crémaillère (30) comprend :
un corps de crémaillère (31) venant en prise avec l'engrenage entraîné ; et
une colonne de liaison (32), dans lequel la colonne de liaison (32) est reliée au corps de crémaillère (31), la colonne de liaison (32) s'ajuste de manière coulissante avec la structure de guidage (11), et passe la section de courbure (16) pendant le fonctionnement, et la colonne de liaison (32) est reliée au couvercle de port de charge (20).

4. Ensemble de port de charge (100) selon la revendication 3, dans lequel l'engrenage entraîné en prise avec la crémaillère (30) vient en prise avec une surface de dent du corps de crémaillère (31), un ergot saillant est agencé sur un côté du corps de crémaillère (31) orienté à l'opposé de la surface de dent, et l'ergot saillant est pourvu de la colonne de liaison (32).

5. Ensemble de port de charge (100) selon la revendication 3 ou 4, dans lequel le corps de crémaillère (31) est doté d'un ou de plusieurs trous d'allègement (33).

6. Ensemble de port de charge (100) selon l'une quelconque des revendications 3 à 5, dans lequel le corps de crémaillère (31) est agencé sur deux côtés du siège de port de charge (10).

7. Ensemble de port de charge (100) selon l'une quelconque des revendications 3 à 6, dans lequel la structure de guidage (11) comprend une rainure coulissante, la colonne de liaison (32) s'étend dans la rainure coulissante et pénètre dans une paroi inférieure de la rainure coulissante, le corps de crémaillère (31) et le couvercle de port de charge (20) sont respectivement reliés aux deux extrémités de la colonne de liaison (32) et respectivement situés sur des côtés de la rainure coulissante, et la rainure coulissante comprend la section de courbure (16).

8. Ensemble de port de charge (100) selon l'une quelconque des revendications 3 à 6, dans lequel la structure de guidage (11) comprend une première rainure coulissante (12) et une seconde rainure coulissante (13), la colonne de liaison (32) comprend une première colonne de liaison (32a) et une seconde colonne de liaison (32b) qui sont reliées aux deux extrémités du corps de crémaillère (31), respectivement, la première colonne de liaison (32a) s'ajuste de manière coulissante avec la première rainure coulissante (12), et la seconde colonne de liaison (32b) s'ajuste de manière coulissante avec la seconde rainure coulissante (13).

9. Ensemble de port de charge (100) selon la revendication 8, dans lequel la première rainure coulissante (12) est dans une forme recourbée et comprend la section de courbure (16).

10. Ensemble de port de charge (100) selon l'une quelconque des revendications 1 à 9, dans lequel le siège de port de charge (10) est doté d'une première colonne de support (14), et un de l'au moins un engrenage entraîné est monté de manière rotative à la première colonne de support (14).

11. Ensemble de port de charge (100) selon l'une quelconque des revendications 1 à 10, dans lequel l'au moins un engrenage entraîné comprend :
un premier engrenage entraîné (40) venant en prise avec la crémaillère (30) ; et
un second engrenage entraîné (51) venant en prise avec l'engrenage d'entraînement (60) et le premier engrenage entraîné (40).

12. Ensemble de port de charge (100) selon la revendication 11, dans lequel l'engrenage d'entraînement (60) est fabriqué à partir d'un matériau POM, le second engrenage entraîné (51) est fabriqué à partir d'un matériau PG6+GF50, le premier engrenage entraîné (40) est fabriqué à partir du matériau POM, et la crémaillère (30) est fabriquée à partir du matériau PG6+GF50.

13. Ensemble de port de charge (100) selon l'une quelconque des revendications 1 à 10, dans lequel l'au moins un engrenage entraîné comprend un premier engrenage entraîné (40) venant en prise avec la crémaillère (30), et le mécanisme d'entraînement comprend en outre :
une courroie de transmission (52),
dans lequel l'engrenage d'entraînement (60) et le premier engrenage entraîné (40) sont espacés l'un de l'autre, et couplés de manière dynamique l'un à l'autre par le biais de la courroie de transmission (52).

14. Véhicule, comprenant l'ensemble de port de charge (100) selon l'une quelconque des revendications 1 à 13.
